# EUROPEAN PATENT APPLICATION

(11) **EP 2 695 909 A1**
(43) Date of publication of application: **12.02.2014**
(21) Application number: 12179783.1
(22) Date of filing: 09.08.2012
(51) Int. Cl.: C08J 11/00, C10G 3/00, C08L 27/06

(54) **Method for the manufacture and use of a green product**

(71) Applicant: SOLVAY SA, 1120 Bruxelles (BE)
(72) Inventor: The designation of the inventor has not yet been filed
(74) Representative: Vande Gucht, Anne

(57) **Abstract**

Method for the manufacture and use of a green product, said method comprising the following steps :
- producing or buying the green product
- controlling or having controlled technically the green character of said product and issuing or getting a green certificate testifying this green character
- using or selling the product for one application and selling the green certificate for another application.

## Description

The present application relates to a method for the manufacture and use of a "green" (with a lower environmental footprint) product.

Today, a lot of efforts are made by governmental and official agencies all over the world in order to promote sustainable chemistry i.e. the manufacture and use of lower footprint products & goods.

One way of implementing "green" chemistry is to switch from fossil fuels (natural gas, crude oil) which are non-renewable feedstocks, to renewable feedstocks.

For the manufacture of ethylene for instance, several ways have been developed, namely : dehydration ofbioethanol obtained by fermentation of sugar, starch, grain, lignocellulosic biomass and other substances ; gasification of biomass and/or biomethane to syngas and then, transformation into methanol and finally, into ethylene via a MTO (methanol-to-olefin) unit. However, the problem is that the ethylene obtained by these technologies is economically less competitive than ethylene obtained from fossil fuels so that legal intervention and/or specific regulations are required to promote and/or enforce the use of a given quota of green ethylene in production units for instance of plastics like PVC (polyvinyl chloride) or PE (polyethylene). Some companies try to overcome that problem by getting a "green" certificate or label from a certified organism like Vinçotte, DEKRA and the like and by using this certificate or label for promoting the sales of their "green" polyethylene and hence, trying to compensate for their loss of profit and/or promoting their image of "green" company.

Another example is the field of recycling. Today, the price of recycling materials (like plastics) is often high so that in the absence of penalties when non respecting a given recycling quota and/or incentives to use recycled materials, the business of recyclers (companies active in recycling) is generally not viable, especially since the price of recycled materials is generally lower than the one of virgin (unused) materials because of their generally lower quality.

In the UK, in the field of packaging, the recyclers may emit (or get from certified organisms) Material Recovery Certificates (MRCs) which they can sell together with the recycled products in order to finance their activity. In the EU, the concept of "Tradable Certificates" is being studied for several years as well in the field of recycling but it has not been implemented as a regulation yet. Its principle is also based on the fact of selling together with the recycled material, a certificate or label attesting its green character, so that said certificate or label can serve to promote the sales of the recycled material.

However, for many different reasons, the buyer of the "green" chemical (like ethylene for instance) or of the recycled plastic (like PVC for instance) might not be interested in using this certificate for promoting its sales. And on the other hand, some manufacturers of plastic goods would like to promote recycling but cannot use recycled plastic themselves for technical reasons.

For instance, the PVC used in plastisol applications (like for making dashboards for instance) must be of very high quality and cannot be a recycled grade while on the other hand, a company involved in that business might be wanting to promote the fact that it contributes to plastic recycling. Also, a company using "green" ethylene might prefer to sell its certificate in order to make directly money out of it (instead of promoting the green character of its final product), while another company might be interested in buying said certificate in order to promote its recycling efforts/environmental contribution while not using such a product. In both cases, the result is the same : the overall production and use of environmental friendly goods is enhanced.

Therefore, the present invention relates to a method for the manufacture and use of a green product, said method comprising the following steps :
- producing or buying the green product
- controlling or having controlled technically the green character of said product and issuing or getting a green certificate testifying this green character
- using or selling the product for one application and selling the green certificate for another application.

Hence, the idea behind the present invention is to dissociate the green certificate from the actual use of the green product in order to promote the manufacture and use of green goods.

By "green" product is meant a product obtained from at least one renewable feedstock and/or from waste and/or produced by using a "green" process i.e. a process consuming less energy, using renewable energy, emitting less CO2 and the like. Generally, by "renewable feedstock" is understood an agricultural material (either from animal or vegetal origin, although the latter is more frequent) used as feedstock for industrial processes. And by "waste" is generally meant used material(s) or production losses and/or non valuable by-products or an industrial process.

By "green certificate" is generally meant a written document (either in paper or in electronic form) certifying the "green" character of a product according to a technical feature which may either be determined experimentally (in the case of an intrinsic property of the product for instance), or that may result from an inspection/audit (in the case of a process step like recycling for instance), or that may be calculated according to known and standardized methods and qualified by Environmental Product Declaration terms which are well known in the field of environmental impact analysis (in the case of a green process as described above for instance).

When the green product of the invention is a carbon containing chemical or hydrocarbon like a (poly)olefin coming from a renewable feedstock, its "green" character and/or the renewability of its feedstock can be technically controlled by determining its biobased contents using radiocarbon (C 14) analysis (for instance according to ASTM D 6866). In that embodiment, the green certificate can comprise an attest (certification) of the C14 content of the product.

When the green product of the invention is coming from organic waste (which may for instance be obtained by composting, chemical recycling and/or pyrolisis of said waste), the same method as above (C14 content analysis) can be used to technically assert its green character. By "organic waste" is generally meant biodegradable waste originating from plant or animal sources, which may be degraded by other living organisms.

When the green product of the invention is coming from waste comprising plastic material(s) (preferably predominantly (i.e. for more than 50%, preferably for at least 90% in weight) or entirely made from plastic material(s)), generally, it has been subjected to at least one recycling step and in that case, either the recycler himself emits a "green" certificate if he is enabled to do so (for instance if he is ISO, DIN, ASTM or otherwise certified for that purpose), or he asks a certified organism as those listed above to emit such a certificate.

In one embodiment, the present invention relates to the use of an olefin accompanied by a green certificate in which this olefin is consumed in a first application and the green certificate is used in another application. Preferably, the green certificate will guarantee a given C 14 content. Ethylene gives good results within the frame of that embodiment. This ethylene is preferably coming from bioethanol as explained above. In that embodiment, a company would buy ethylene accompanied by a green certificate to make a monomer like VC (vinyl chloride) with in fine, the aim of making a plastic like PVC (polyvinyl chloride) for instance, and sell said green certificate to another company that would make another plastic like PE (polyethylene) but that for technical reasons, cannot use the green ethylene therefore but could nevertheless give a positive environmental image of its product by advertising the green certificate it bought.

In another embodiment, the present invention relates to the use of a plastic accompanied by a green certificate in which this plastic is consumed in a first application and the green certificate is used in another application. Preferably, the green certificate will guarantee a given C14 content. Polyolefins give good results within the frame of that embodiment, and more particularly PE. Halogenated polymers like PVC or PVDC (polyvinyl dichloride) also give good results within the frame of that embodiment, especially PVC. Polyamides (PA) and PET (polyethylene terephtalate) are also worth being considered within the frame of this embodiment of the invention. It could be for instance that a company using a green plastic, made from renewable feedstock, is implanted in an area where such a feedstock is available but where promoting recycling doesn't bring any (or only a low) commercial benefit. In that case, said company might be interested in selling its green certificate to another company, located close to a cracker and using ethylene produced therein.

In another embodiment, the present invention relates to a process for producing and using or selling a recycled plastic, comprising the steps of :
- producing a given amount of recycled plastic
- issuing or getting a green certificate for said amount of recycled plastic
- using or selling said amount of recycled plastic and the green certificate for two different applications.

In this embodiment again, all the plastics listed above may be concerned. Halogenated polymers like PVC or PVDC give good results, especially PVC. In the case of PVC, a company could for instance buy a given quantity of recycled PVC accompanied by a green certificate and use it in an application for which he doesn't want to put forward the fact that said PVC is recycled. It is namely so that recycled plastics have the reputation of being of lower quality, which is not the case however with some recycled plastics like for instance those obtained by dissolution/precipitation/recovery from solution as discussed below. Their quality is often high enough to be re-used in the same application e.g. hoses or foils. In that case, said company could (re)use recycled materials in its application and sell its green certificate to another company that cannot use recycled PVC for technical reasons (in a plastisol application for instance, a plastisol being a liquid dispersion consisting of very small particles of resin in a plasticizer ; when heated, the mass first gels and then fuses to become a thermoplastic used as a coating, for molding, etc.) but would nevertheless like to give a positive environmental image of its product by advertising the green certificate it bought.

In the above, by "PVC" is meant a polymer derived from vinyl chloride - either homopolymers (PVC), or copolymer (with vinyl acetate for example, or VC/VAc copolymers) but that preferably has at least 50% by weight of vinyl chloride.

In that embodiment, the recycling may be a mere mechanical recycling (involving at least one mechanical treatment step like grinding, cleaning, reprocessing (i.e. melting and shaping)...) or a (physico)chemical recycling, for instance implying the dissolution/precipitation/recovery from solution of the concerned plastic. The latter method gives good results especially with PVC and more specifically : with the process called Vinyloop® developed by the Applicant.

In that process, the principles of which are disclosed in many patent applications among which EP 945481, EP 1232204, EP 1268628 and EP 2203484, (the content of which are being incorporated by reference in the present application), an article based on at least one vinyl chloride polymer is submitted to the following steps :
(a) the article is shredded if required ;
(b) the fragments of the article are brought into contact with a solvent capable of dissolving the vinyl chloride polymer, forming an azeotrope with water ;
(c) the polymer dissolved in the solvent is precipitated by injecting steam in the solution thus obtained, which moreover leads to the stripping of the water-solvent azeotrope and so leaves behind a mixture essentially consisting of water and of solid polymer particles;
(d) the polymer particles are recovered.

In this embodiment, the green certificate could be emitted by the recycler himself to the extent that he is empowered (certified) to do so, for instance by being (regularly) controlled and audited by an appropriate organism. Alternatively, the green character of the chemical could be certified by such an organism which would then operate the required controls.

In a preferred embodiment of the invention, a certified organism (eventually the same as the one which emitted the green certificate) controls (audits) the sale of the green certificate from the "emitting" company to the buying company so that the latter can be green certified.

## Claims

1. Method for the manufacture and use of a green product, said method comprising the following steps :
- producing or buying the green product
- controlling or having controlled technically the green character of said product and issuing or getting a green certificate testifying this green character
- using or selling the product for one application and selling the green certificate for another application.

2. Method according to the preceding claim, wherein the green product is a hydrocarbon coming from a renewable feedstock or from organic waste, and wherein the green certificate comprises an attest (certification) of the C14 content of the product.

3. Method according to claim 1, wherein the green product is coming from waste comprising plastic material(s) and which has been subjected to at least one recycling step and wherein either the recycler himself emits the green certificate or he asks a certified organism to emit such a certificate.

4. Use of an olefin accompanied by a green certificate in which the olefin is consumed in a first application and the green certificate is used in another application.

5. Use according to the preceding claim, wherein the olefin is ethylene.

6. Use according to the preceding claim, wherein the ethylene is manufactured from bioethanol.

7. Use according to any of claims 4 to 6, wherein the olefin is consumed to make VC (vinyl chloride monomer) and wherein the green certificate is used to promote the sale of PE (polyethylene).

8. Use of a plastic accompanied by a green certificate in which this plastic is consumed in a first application and the green certificate is used in another application.

9. Use according to the preceding claim, wherein the green certificate comprises an attest (certification) of the C 14 content of the plastic.

10. Process for producing and using or selling a recycled plastic, comprising the steps of:
- producing a given amount of recycled plastic
- issuing or getting a green certificate for said amount of recycled plastic
- using or selling said amount of recycled plastic and the green certificate for two different applications.

11. Process according to the preceding claim, wherein the recycling step comprises a dissolution/precipitation/recovery from solution of the concerned plastic.

12. Process according to claim 10 or 11, wherein the plastic is PVC.

13. Process according to the preceding claim, wherein an article based on PVC is submitted to the following steps :
(a) the article is shredded if required ;
(b) the fragments of the article are brought into contact with a solvent capable of dissolving the vinyl chloride polymer, forming an azeotrope with water ;
(c) the polymer dissolved in the solvent is precipitated by injecting steam in the solution thus obtained, which moreover leads to the stripping of the water-solvent azeotrope and so leaves behind a mixture essentially consisting of water and of solid polymer particles;
(d) the polymer particles are recovered.

14. Method, use of process according to any of the preceding claims, wherein the sale of the green certificate from the "emitting" company to the buying company is controlled by a certified organism.
